# EUROPÄISCHE PATENTSCHRIFT

(11) **EP 2 602 147 B1**
(45) Veröffentlichungstag und Bekanntmachung des Hinweises auf die Patenterteilung: **11.01.2017**
(21) Anmeldenummer: 12007545.2
(22) Anmeldetag: 06.11.2012
(51) Int. Cl.: B60K 25/04, B60T 17/02, F02D 45/00, F01M 1/16, B60K 25/00, B60T 17/22, B60W 10/02, B60W 10/06, B60W 10/18, B60W 30/18, B60W 30/188, F16H 59/18, F16H 59/22, F16H 59/24, F16H 59/34, F02D 41/12

(54) **Verfahren zum Betrieb einer Unterdruckpumpe**
Method for operating a vacuum pump
Procédé destiné au fonctionnement d'une pompe à vide

(30) Priorität: 09.12.2011 DE 102011120780
(43) Veröffentlichungstag der Anmeldung: 12.06.2013
(73) Patentinhaber: Volkswagen Aktiengesellschaft, 38440 Wolfsburg (DE)
(72) Erfinder: Pott, Ekkehard, DE - 38518 Gifhorn (DE)

(56) Entgegenhaltungen:
- EP-A2- 1 681 219
- WO-A1-2008/003547
- WO-A1-2010/061237
- DE-A1- 19 929 880
- US-A- 4 738 112
- US-A1- 2011 144 846

## Beschreibung

Die Erfindung betrifft ein Verfahren zum Betrieb einer einer Brennkraftmaschine zugeordneten Unterdruckpumpe, insbesondere zur Versorgung von Stellgliedern der Brennkraftmaschine, wobei die Unterdruckpumpe von der Brennkraftmaschine direkt oder mittelbar antreibbar ist und bei Erreichen eines Einschaltdrucks eingeschaltet und nach dem Erreichen eines Ausschaltdrucks ausgeschaltet wird, wobei der Betriebszustand der Brennkraftmaschine erfasst wird und bei Erreichen vorbestimmter Betriebsbedingungen der Brennkraftmaschine die Unterdruckpumpe in Abhängigkeit zumindest eines weiteren Einschaltdrucks und/oder eines weiteren Ausschaltdrucks betrieben bzw. abgeschaltet wird.

Ein gattungsgemäßes Verfahren ist beispielsweise aus der US 4,738,112 A bekannt. Dabei werden hinsichtlich der Versorgung der Vakuumpumpe zwei Betriebszustände berücksichtigt, nämlich ein erster Modus bei hoher Geschwindigkeit und bei Unterschreiten eines ersten Grenzwertes für eine kurze Zeit sowie ein zweiter Modus bei niedriger Geschwindigkeit und bei Unterschreiten eines zweiten Grenzwertes, der wesentlich unter dem ersten Grenzwert liegt, für einen deutlich längeren Zeitraum.

Weiterhin bezieht sich die WO 2008/003547 A1 auf ein Verfahren zum Betrieb einer einer Brennkraftmaschine zugeordneten Unterdruckpumpe, bei dem der Schaltdruck bei höheren Geschwindigkeiten verändert wird, um das Unterdruckniveau bei bremswegkritischen Geschwindigkeiten zu erhöhen.

In der Praxis erfolgt im Betrieb von Brennkraftmaschinen eine Versorgung zahlreicher Stellglieder mit Unterdruck. Dies betrifft sowohl Aktuatoren an der Brennkraftmaschine als auch weitere Funktionselemente, die der Brennkraftmaschine zugeordnet und mit dieser direkt oder indirekt verbunden sind. Der hierzu erforderliche Unterdruck wird von einer auch als Vakuumpumpe bezeichneten Unterdruckpumpe erzeugt, die auf verschiedene Arten angetrieben sein kann.

Zum Stand der Technik zählt ein permanenter mechanischer Antrieb der Unterdruckpumpe, um so stets einen ausreichenden Unterdruck an sicherheits- und emissionsrelevanten Bauteilen zur Verfügung zu stellen. Der permanente Betrieb der Unterdruckpumpe ist energetisch nicht optimal, da die Erzeugung des Vakuums nicht in Abhängigkeit des Bedarfs erfolgt.

Neben permanenten mechanischen Antrieben sind bereits mechanisch abschaltbare Unterdruckpumpen bekannt, die lediglich bedarfsweise mit der Antriebsleistung der Brennkraftmaschine verbunden werden und im Übrigen mechanisch getrennt sind.

Es sich auch bereits elektrische Unterdruckpumpen bekannt, die beispielsweise in Bremssystemen mit pneumatischen Bremskraftverstärkern eingesetzt werden, um in einer Kammer des Bremskraftverstärkers einen Unterdruck zu erzeugen. Derartige Bremskraftverstärker mit zusätzlicher Unterdruckpumpe werden insbesondere bei Fahrzeugen mit Dieselmotoren sowie bei Nutzfahrzeugen eingesetzt.

Die DE 199 29 880 A1 beschreibt eine solche elektromotorisch angetriebene Unterdruckpumpe, die abhängig von dem herrschenden Unterdruck aktiviert beziehungsweise deaktiviert wird.

Für die Aufrechterhaltung der Unterdruckversorgung auch über längere Betriebszeiträume ist die Funktionstüchtigkeit der Unterdruckpumpe entscheidend. Aufgrund der begrenzten Lebensdauer von elektrischen Unterdruckpumpen ändert sich infolge von Verschleiß mit zunehmender Laufleistung die Leistungsfähigkeit der Pumpe, wodurch die Unterdruckversorgung verschlechtert wird.

Die WO 2011/054623 A1 beschreibt ein Verfahren zur Funktionsüberwachung einer elektrischen Unterdruckpumpe wie sie in Bremssystemen von Fahrzeugen eingesetzt wird, die einen pneumatischen Bremskraftverstärker aufweisen. Die Unterdruckpumpe wird im Betrieb zwischen einem Einschaltdruck, der eine erste Druckschwelle darstellt, und einem Ausschaltdruck, der eine zweite Druckschwelle bezeichnet, betätigt. Diese Druckschwellen kennzeichnen einen Evakuierungszeitraum, in welchem das Medium in der Unterdruckkammer des Bremskraftverstärkers evakuiert und hierdurch ein Unterdruck erzeugt wird.

Die WO 02/12041 A1 betrifft ein Verfahren zum Betreiben eines in einer Brennkraftmaschine vorgesehenen Unterdruckspeichers, der mit einer elektrischen Saugpumpe verbunden ist, die dann betrieben wird, wenn die Differenz zwischen dem in dem Saugrohr oder der Saugpumpe herrschenden Druck und dem in dem Unterdruckspeicher herrschenden Druck einen vorgegebenen Schwellenwert überschreitet. Betriebszustände der Brennkraftmaschine, insbesondere aus Fahrzuständen des Kraftfahrzeugs, können berücksichtigt werden.

Die DE 198 46 887 A1 betrifft eine Saugvorrichtung, um Bremsstaub einer Fahrzeugbremse abzusaugen. Der benötigte Unterdruck wird mittels eines dem Fahrtwind ausgesetzten VenturiRohrs erzeugt oder aus einer durch den Kraftfahrzeugmotor oder durch einen Elektromotor angetriebenen Pumpe entnommen.

Vor diesem Hintergrund liegt der Erfindung die Aufgabe zugrunde, ein im Hinblick auf eine energetisch optimale sowie umweltschonende Betriebsweise optimiertes Verfahren zu schaffen.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren vorgesehen, bei dem die zugeführte Kraftstoffmenge erfasst und bei Unterschreiten einer vorbestimmten minimalen Menge des zugeführten Kraftstoffs die Unterdruckpumpe in Abhängigkeit eines zweiten Einschaltdrucks oder eines zweiten Ausschaltdrucks ein- bzw. abgeschaltet wird. Hierdurch wird eine energetisch optimale Betriebsweise dadurch erreicht, dass der aktuelle Betriebspunkt der Brennkraftmaschine im Betrieb berücksichtigt, insbesondere also zumindest der Einschaltdruck oder der Ausschaltdruck in Abhängigkeit des zugeführten Kraftstoffs entsprechend angepasst wird. Zu diesem Zweck wird der Einschaltdruck bzw. der Ausschaltdruck mit einem Korrekturwert mit einem positiven oder negativen Vorzeichen belegt, um so einen zweiten Einschaltdruck oder einen zweiten Ausschaltdruck der Unterdruckpumpe zu definieren. Indem der jeweilige Einschaltdruck oder Ausschaltdruck entsprechend der Betriebsbedingungen der Brennkraftmaschine optimiert ist, kann in überraschend einfacherweise eine CO₂-Minderung um bis zu 2 g/km erreicht werden. Selbstverständlich ist die Erfindung nicht auf lediglich zwei unterschiedliche Betriebsstrategien der Unterdruckpumpe beschränkt. Vielmehr können weitere Schwellenwerte für-verschiedene Fahr- oder Betriebsbedingungen des Kraftfahrzeugs oder der Brennkraftmaschine definiert und der Steuerung der Unterdruckpumpe entsprechend zugrunde gelegt werden. Bevorzugt ist das Verfahren bei Dieselmotoren einsetzbar.

Vorzugsweise erfolgt der Antrieb der Unterdruckpumpe im Schubbetrieb, da hierbei keine oder eine sehr geringe Kraftstoffmenge in der Brennkraftmaschine umgesetzt wird. Hierzu wird unabhängig von dem jeweiligen Druckniveau im Unterdrucksystem zunächst die Unterdruckpumpe solange betrieben, bis der zweite Ausschaltdruck erreicht bzw. unterschritten wird. Sofern im Verlauf der Dauer des Schubbetriebs der Druck im Unterdrucksystem steigt, wird bei Erreichen bzw. Überschreiten eines zweiten Einschaltdrucks innerhalb des Unterdrucksystems die Unterdruckpumpe erneut aktiviert. Zur Erfassung des für die Schaltdruckverlagerung kennzeichnenden und relevanten Betriebszustands hat es sich als praxisgerecht erwiesen, wenn bei Unterschreiten einer vorbestimmten minimalen Menge des zugeführten Kraftstoffs die Unterdruckpumpe in Abhängigkeit eines zweiten Einschaltdrucks oder eines zweiten Ausschaltdrucks betrieben bzw. abgeschaltet wird, vorzugsweise also die Unterdruckpumpe ausschließlich in einem Schubbetrieb in Abhängigkeit des zweiten Einschaltdrucks oder des zweiten Ausschaltdrucks betrieben bzw. abgeschaltet wird. Ein solcher Schubbetrieb entspricht einer Betriebsphase des Kraftfahrzeugs während einer Verzögerungsphase, in welcher das von dem Fahrzeugführer mittels des Gaspedals angeforderte Fahrerwunschmoment kleiner ist als ein vom Kraftfahrzeug erbrachtes Schubmoment. In diesem Fall befindet sich die Brennkraftmaschine in einer Schubphase. Insbesondere verrichtet die Brennkraftmaschine während der Schubphase nur eine geringe Arbeit, wobei die Fahrzeuggeschwindigkeit im Wesentlichen durch das Schubmoment aufrechterhalten wird, obwohl durch die Kraftstoffzufuhr in der Schubphase stets ein gewisses Nutzmoment erzeugt wird.

Nach einer besonders bevorzugten Ausgestaltung des Verfahrens wird zumindest der erste Einschaltdruck von dem zweiten Einschaltdruck oder der erste Ausschaltdruck von dem zweiten Ausschaltdruck abweichend bestimmt, wobei der Differenzbetrag zwischen dem ersten Einschaltdruck und dem zweiten Einschaltdruck einerseits und dem ersten Ausschaltdruck und dem zweiten Ausschaltdruck andererseits übereinstimmend eingestellt wird. Hierdurch kommt es zu einer Verschiebung des Arbeitsbereichs der Unterdruckpumpe, insbesondere also zu einer Verlagerung des Druckbereichs zwischen Einschaltdruck und Ausschaltdruck, wobei die Differenz zwischen Einschaltdruck und Ausschaltdruck in allen Betriebsphase im Wesentlichen konstant bleibt. Auf diese Weise wird eine optimale Ausnutzung der von der Brennkraftmaschine mittelbar oder unmittelbar bereitgestellten Energie erreicht, ohne die Betriebsphase der Unterdruckpumpe wesentlich zu verlängern. Ein frühzeitiger Verschleiß kann dadurch vermieden werden.

Weiterhin erweist sich eine Ausgestaltung des erfindungsgemäßen Verfahrens als besonders vorteilhaft, wenn der zweite Einschaltdruck zwischen dem ersten Einschaltdruck und dem ersten Ausschaltdruck liegt. Dadurch wird der Arbeitsbereich der Unterdruckpumpe in den Bereich eines geringeren Druckniveaus verschoben, sodass sich also ein geringerer Druck als Messwert und damit Druckschwellenwert für den Einschaltdruck ergibt.

Weiterhin ist es dabei von Vorteil, wenn der zweite Ausschaltdruck unterhalb des ersten Ausschaltdrucks liegt, sodass also die Unterdruckpumpe bis in den Bereich eines sehr niedrigen Drucks hinein betrieben werden kann.

Die erforderliche Energieversorgung der Unterdruckpumpe könnte aus einem elektrischen Energiespeicher erfolgen. Um die Betriebspunkte der Brennkraftmaschine mit einer unvollständigen Umsetzung der zugeführten Kraftstoffmenge in sinnvoller Weise zu nutzen, ist die Unterdruckpumpe mittels einer schaltbaren Kupplung mit der Brennkraftmaschine verbunden oder wird von einem elektrischen Antrieb angetrieben, der seine Energie von einem durch die Brennkraftmaschine antreibbaren elektrischen Generator erhält, sodass die Antriebsleistung der Brennkraftmaschine in optimaler Weise umgesetzt werden kann.

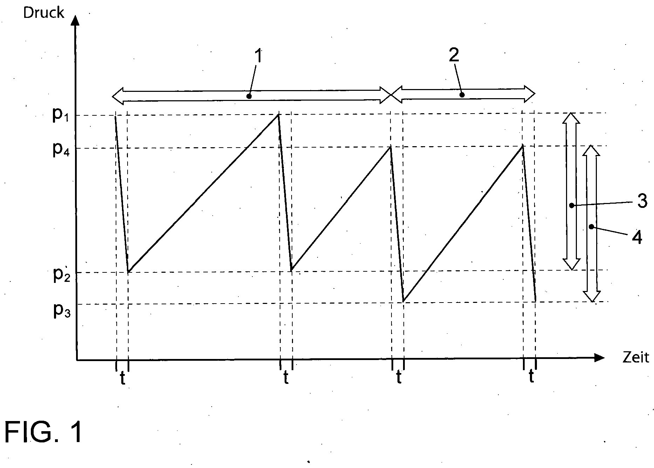

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt eine graphische Darstellung einer erfindungsgemäßen Betriebsstrategie, in welcher der in einem Unterdrucksystem eines Kraftfahrzeugs vorherrschende Druck auf der Ordinatenachse und der zeitliche Verlauf des Betriebs auf der Abszissenachse aufgetragen ist. Zunächst wird in einer gewöhnlichen Betriebsphase 1 eine einer nicht dargestellten Brennkraftmaschine zugeordnete Unterdruckpumpe zur Versorgung von Stellgliedern der Brennkraftmaschine zwischen einem ersten Einschaltdruck p₁ und einem ersten Ausschaltdruck p₂ betrieben. Zu erkennen sind übereinstimmende Betriebsdauern t der Unterdruckpumpe zur Aufrechterhaltung eines zwischen dem ersten Einschaltdruck p₁ und dem ersten Ausschaltdruck p₂ liegenden Druckbereichs 3 innerhalb des Vakuumsystems während der Betriebsphase 1. Dieser gewöhnlichen Betriebsphase 1 schließt sich eine Schubphase 2 der Brennkraftmaschine an, in welcher nur eine eingeschränkte Menge des zugeführten Kraftstoffs innerhalb der Brennkraftmaschine umgesetzt werden kann. Diese anderenfalls nutzlose Energiebereitstellung wird erfindungsgemäß durch eine Verschiebung der Betriebspunkte der Unterdruckpumpe genutzt. Zu diesem Zweck wird bei Unterschreiten einer vorbestimmten minimalen Menge des der Brennkraftmaschine zugeführten Kraftstoffs die Unterdruckpumpe ausschließlich zwischen einem zweiten Einschaltdruck p₄ und einem zweiten Ausschaltdruck p₃ in einem Druckbereich 4 betrieben. Indem der Differenzdruck zwischen dem ersten Einschaltdruck p₁ und dem zweiten Einschaltdruck p₄ mit dem Differenzdruck zwischen dem ersten Ausschaltdruck p₂ und dem zweiten Ausschaltdruck p₃ im Wesentlichen überstimmt, ist die Betriebsdauer t während der Schubphase 2 gegenüber der Betriebsdauer t während der gewöhnlichen Betriebsphase 1 unverändert. Dadurch, dass das Druckniveau zwischen dem Einschaltdruck p₄ und dem zweiten Ausschaltdruck p₃ insgesamt in den Bereich eines geringeren Drucks verschoben wird, kann die Antriebsleistung der Brennkraftmaschine optimal genutzt werden, die hierzu mit der Unterdruckpumpe beispielsweise mittels einer schaltbaren Kupplung verbunden ist.

## Patentansprüche

1. Verfahren zum Betrieb einer einer Brennkraftmaschine zugeordneten Unterdruckpumpe, insbesondere zur Versorgung von Stellgliedern der Brennkraftmaschine, wobei die Unterdruckpumpe von der Brennkraftmaschine direkt oder mittelbar antreibbar ist und bei Erreichen eines ersten Einschaltdrucks (p₁) eingeschaltet und nach dem Erreichen eines ersten Ausschaltdrucks (p₂) ausgeschaltet wird, wobei der Betriebszustand der Brennkraftmaschine erfasst wird und bei Erreichen vorbestimmter Betriebsbedingungen der Brennkraftmaschine die Unterdruckpumpe in Abhängigkeit zumindest eines weiteren Einschaltdrucks und/oder eines weiteren Ausschaltdrucks betrieben bzw. abgeschaltet wird, **dadurch gekennzeichnet, dass** die zugeführte Kraftstoffmenge erfasst und bei Unterschreiten einer vorbestimmten minimalen Menge des zugeführten Kraftstoffs die Unterdruckpumpe in Abhängigkeit eines zweiten Einschaltdrucks (p₄) und/oder eines zweiten Ausschaltdrucks (p₃) ein- bzw. abgeschaltet wird.

2. Verfahren nach Anspruch 1, **dadurch gekennzeichnet, dass** die Unterdruckpumpe ausschließlich in einem Schubbetrieb in Abhängigkeit eines zweiten Einschaltdrucks (p₄) und/oder eines zweiten Ausschaltdrucks (p₃) ein- bzw. abgeschaltet wird.

3. Verfahren nach den Ansprüchen 1 oder 2, **dadurch gekennzeichnet, dass** zumindest der erste Einschaltdruck (p₁) von dem zweiten Einschaltdruck (p₄) oder der erste Ausschaltdruck (p₂) von dem zweiten Ausschaltdruck (p₃) abweichend bestimmt wird.

4. Verfahren nach zumindest einem der vorangehenden Ansprüche, **dadurch gekennzeichnet, dass** die Druckdifferenz zwischen dem ersten Einschaltdruck (p₁) und dem zweiten Einschaltdruck (p₄) einerseits und die Druckdifferenz zwischen dem ersten Ausschaltdruck (p₂) und dem zweiten Ausschaltdruck (p₃) andererseits übereinstimmend eingestellt wird.

5. Verfahren nach zumindest einem der vorangehenden Ansprüche, **dadurch gekennzeichnet, dass** der zweite Einschaltdruck (p₄) zwischen dem ersten Einschaltdruck (p₁) und dem ersten Ausschaltdruck (p₂) liegt.

6. Verfahren nach zumindest einem der vorangehenden Ansprüche, **dadurch gekennzeichnet, dass** der zweite Ausschaltdruck (p₃) unterhalb des ersten Ausschaltdrucks (p₂) liegt.

7. Verfahren nach zumindest einem der vorangehenden Ansprüche, **dadurch gekennzeichnet, dass** die Unterdruckpumpe mittels einer schaltbaren Kupplung mit der Brennkraftmaschine verbunden ist.

8. Verfahren nach zumindest einem der vorangehenden Ansprüche, **dadurch gekennzeichnet, dass** die Unterdruckpumpe von einem elektrischen Antrieb antreibbar ist, der seine Energie von einem durch die Brennkraftmaschine antreibbaren elektrischen Generator erhält:

## Claims

1. Method for operating a vacuum pump associated with an internal combustion engine, in particular for supplying actuator elements of the internal combustion engine, wherein the vacuum pump can be driven directly or indirectly by the internal combustion engine, and when a first switch-on pressure (p₁) is reached it is switched on, and after a first switch-off pressure (p₂) is reached it is switched off, wherein the operating state of the internal combustion engine is detected, and when predetermined operating conditions of the internal combustion engine are reached the vacuum pump is operated or switched off as a function of at least one further switch-on pressure and/or one further switch-off pressure, **characterized in that** the supplied quantity of fuel is detected and when a predetermined minimum quantity of the supplied fuel is undershot the vacuum pump is switched on or off as a function of a second switch-on pressure (p₄) and/or of a second switch-off pressure (p₃) .

2. Method according to Claim 1, **characterized in that** the vacuum pump is exclusively switched on or switched off in an overrun mode as a function of a second switch-on pressure (p₄) and/or a second switch-off pressure (p₃) .

3. Method according to Claims 1 or 2, **characterized in that** at least the first switch-on pressure (p₁) is determined in a different way from the second switch-on pressure (p₄), or the first switch-off pressure (p₂) is determined in a different way from the second switch-off pressure (p₃) .

4. Method according to at least one of the preceding claims, **characterized in that** the pressure difference between the first switch-on pressure (p₁) and the second switch-on pressure (p₄), on the one hand, and the pressure difference between the first switch-off pressure (p₂) and the second switch-off pressure (p₃), on the other hand, are set in a corresponding fashion.

5. Method according to at least one of the preceding claims, **characterized in that** the second switch-on pressure (p₄) is between the first switch-on pressure (p₁) and the first switch-off pressure (p₂).

6. Method according to at least one of the preceding claims, **characterized in that** the second switch-off pressure (p₃) is below the first switch-off pressure (p₂).

7. Method according to at least one of the preceding claims, **characterized in that** the vacuum pump is connected to the internal combustion engine by means of a shiftable clutch.

8. Method according to at least one of the preceding claims, **characterized in that** the vacuum pump can be driven by an electric drive which receives its energy from an electric generator which can be driven by the internal combustion engine.

## Revendications

1. Procédé destiné au fonctionnement d'une pompe à vide associée à un moteur à combustion interne, en particulier pour l'alimentation d'actionneurs du moteur à combustion interne, la pompe à vide pouvant être entraînée directement ou indirectement par le moteur à combustion interne, et étant mise en marche à l'obtention d'une première pression de mise en marche (p₁) et étant arrêtée à l'obtention d'une première pression d'arrêt (p₂), l'état de fonctionnement du moteur à combustion interne étant détecté et à l'obtention de conditions de fonctionnement prédéterminées du moteur à combustion interne, la pompe à vide étant mise en fonctionnement et/ou arrêtée en fonction d'au moins une pression de mise en marche supplémentaire et/ou d'une pression d'arrêt supplémentaire, **caractérisé en ce que** la quantité de carburant acheminée est détectée et en dessous d'une quantité minimale prédéterminée de carburant acheminé, la pompe à vide étant mise en marche ou arrêtée en fonction d'une deuxième pression de mise en marche (p₄) et/ou d'une deuxième pression d'arrêt (p₃) .

2. Procédé selon la revendication 1, **caractérisé en ce que** la pompe à vide est mise en marche ou arrêtée exclusivement en mode de poussée en fonction d'une deuxième pression de mise en marche (p₄) et/ou d'une deuxième pression d'arrêt (p₃).

3. Procédé selon les revendications 1 ou 2, **caractérisé en ce qu'au** moins la première pression de mise en marche (p₁) est déterminée de manière à être différente de la deuxième pression de mise en marche (p₄) ou la première pression d'arrêt (p₂) est déterminée de manière à être différente de la deuxième pression d'arrêt (p₃).

4. Procédé selon au moins l'une quelconque des revendications précédentes, **caractérisé en ce que** la différence de pression entre la première pression de mise en marche (p₁) et la deuxième pression de mise en marche (p₄) d'une part et la différence de pression entre la première pression d'arrêt (p₂) et la deuxième pression d'arrêt (p₃) d'autre part sont ajustées de manière à coïncider.

5. Procédé selon au moins l'une quelconque des revendications précédentes, **caractérisé en ce que** la deuxième pression de mise en marche (p₄) est située entre la première pression de mise en marche (p₁) et la première pression d'arrêt (p₂).

6. Procédé selon au moins l'une quelconque des revendications précédentes, **caractérisé en ce que** la deuxième pression d'arrêt (p₃) est située en dessous de la première pression d'arrêt (p₂).

7. Procédé selon au moins l'une quelconque des revendications précédentes, **caractérisé en ce que** la pompe à vide est connectée au moteur à combustion interne au moyen d'un accouplement commutable.

8. Procédé selon au moins l'une quelconque des revendications précédentes, **caractérisé en ce que** la pompe à vide peut être entraînée par un entraînement électrique qui reçoit son énergie d'un générateur électrique pouvant être entraîné par le moteur à combustion interne.
